# EUROPEAN PATENT APPLICATION

(11) **EP 4 418 564 A1**
(43) Date of publication of application: **21.08.2024**
(21) Application number: 23157362.7
(22) Date of filing: 17.02.2023
(51) Int. Cl.: H04B 7/185

(54) **IMPROVEMENT OF HANDOVER TIMING FOR NTN**

(71) Applicant: Panasonic Intellectual Property Corporation of America, Torrance, CA 90504 (US)
(72) Inventor: HERRMANN, Frank, 63225 Langen (DE); SUZUKI, Hidetoshi, Osaka, 571-8501 (JP); NISHIO, Akihiko, Osaka, 571-8501 (JP); KLENNER, Peter, 63225 Langen (DE)
(74) Representative: Grünecker Patent- und Rechtsanwälte PartG mbB

(57) **Abstract**

An embodiment relates to system information for supporting a handover in non-terrestrial networks. For example, a terminal receives system information for a non-terrestrial network. It further determines, from the system information, an information element including an indication of coverage of one or more neighboring cells adjacent to a serving cell of said UE; and determines whether or not to handover according to the coverage of at least one neighboring cell out of the one or more neighboring cells and according to a location of the UE.

## Description

### 1. Technical Field

The present disclosure relates to transmission of system information relating to a non-terrestrial network. In particular, the present invention relates to apparatuses and methods that generate, signal, receive, and/or utilize the system information relating to a non-terrestrial network.

### 2. Description of the Related Art

Currently, the 3rd Generation Partnership Project (3GPP) has been working on the technical specifications for the next generation cellular technology, which is also called fifth generation (5G) or new radio (NR).

One objective is to provide a single technical framework addressing all usage scenarios, requirements and deployment scenarios, at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

One notable feature of 5G is the introduction of non-terrestrial networks (NTN) including a satellite in the communication path between a user device and a network. Thanks to the wide service coverage capabilities and reduced vulnerability of space or airborne vehicles to physical attacks and natural disasters, NTNs may foster the rollout of NR service in unserved areas that cannot be covered by terrestrial NR networks (for instance isolated or remote areas, on board aircraft or vessels) and unserved (for instance suburban and rural areas). Further, NTNs may reinforce NR service reliability by providing service continuity for passengers on moving platforms or ensuring service availability anywhere, especially for critical communication.

The benefits relate to either non-terrestrial networks operating alone or to integrated terrestrial and non-terrestrial networks, which may impact coverage, user bandwidth, system capacity, service reliability or availability. Further improvements of the NTN are desirable in order to increase coverage and efficiency of the communications system.

### SUMMARY

One non-limiting and exemplary embodiment facilitates efficient performance of a handover in non-terrestrial networks.

In an embodiment, the techniques disclosed herein feature a UE that comprises a transceiver and a circuitry. The transceiver, in operation, receives system information for a non-terrestrial network. The circuitry, in operation determines, from the system information, an information element including an indication of coverage of one or more neighboring cells adjacent to a serving cell of said UE; and determines whether or not to handover according to the coverage of at least one neighboring cell out of the one or more neighboring cells and according to a location of the UE.

It should be noted that general or specific embodiments may be implemented as a system, a method, an integrated circuit, a computer program, a storage medium, or any selective combination thereof. For instance, an integrated circuit can control a process of a UE or network node.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: is a block diagram that shows an exemplary architecture for a 3GPP NR system.
- **Fig. 2**: is a block diagram that shows a functional split between NG-RAN and 5GC.
- **Fig. 3**: is a message sequence diagram for RRC connection setup/reconfiguration procedures.
- **Fig. 4**: is a schematic drawing showing usage scenarios of Enhanced mobile broadband (eMBB), Massive Machine Type Communications (mMTC) and Ultra Reliable and Low Latency Communications (URLLC).
- **Fig. 5**: is a block diagram showing an exemplary 5G system architecture for a non-roaming scenario.
- **Fig. 6**: is a block diagram that illustrates an exemplary NG RAN architecture based on a transparent satellite.
- **Fig. 7**: is a block diagram that illustrates an exemplary NG RAN architecture based on a regenerative satellite.
- **Fig. 8**: is a block diagram that illustrates an exemplary scenario where several UEs are served by a satellite.
- **Fig. 9**: is a schematic drawing that illustrates a exemplary scenarios of received signal strength characteristics for terrestrial and non-terrestrial networks.
- **Fig. 10**: is a schematic drawing that illustrates moving serving cell and surrounding neighbor cells.
- **Fig. 11**: is a block diagram that illustrates structure of a UE and a BS that may be in communication with each other.
- **Fig. 12**: is a block diagram that illustrates functional structure of a memory module that includes code instructions for being executed by a circuitry including one or more processors for UE and BS.
- **Fig. 13**: is a schematic drawing illustrating impact of the opening angle of a satellite beam on the cell coverage.
- **Fig. 14**: is a schematic drawing illustrating impact of the opening angle and a tilt angle of a satellite beam on the cell coverage.
- **Fig. 15**: is a schematic drawing that illustrates a scenario generating an ellipsoid cell shape.
- **Fig. 16**: is a schematic drawing that illustrates an exemplary scenario of moving non-terrestrial cells including a serving cell and three handover candidate cells.
- **Fig. 17**: is a schematic drawing that illustrates an exemplary scenario of moving non-terrestrial cells including a serving cell and three handover candidate cells defined by way of cell centre and radius.
- **Fig. 18**: is a flow diagram that illustrates a method for being performed at a UE side for performing a handover based on neighboring cell coverage signaling.
- **Fig. 19**: is a flow diagram that illustrates a method for being performed at a UE side for performing a handover without on neighboring cell coverage signaling.
- **Fig. 20**: is a flow diagram that illustrates another method for being performed at a UE side for performing a handover without on neighboring cell coverage signaling.

### DETAILED DESCRIPTION

### 5G NR system architecture and protocol stacks

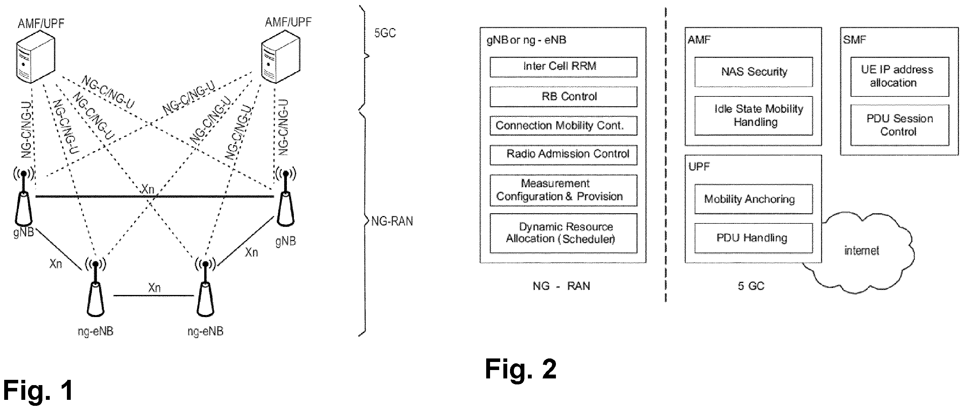

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v16.3.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.3.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UUDL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

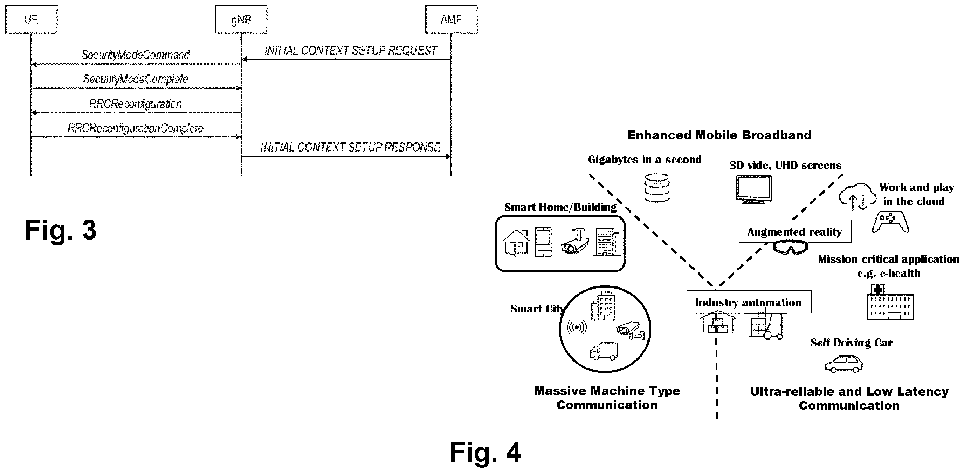

**Fig. 3** illustrates some interactions between a UE, gNB, and AMF (a 5GC entity) in the context of a transition of the UE from RRC_IDLE to RRC_CONNECTED for the NAS part (see TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNB, and a transmitter which, in operation, transmits an initial context setup message, via the NG connection, to the gNB to cause a signaling radio bearer setup between the gNB and a user equipment (UE). In particular, the gNB transmits a Radio Resource Control, RRC, signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913 version 16.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

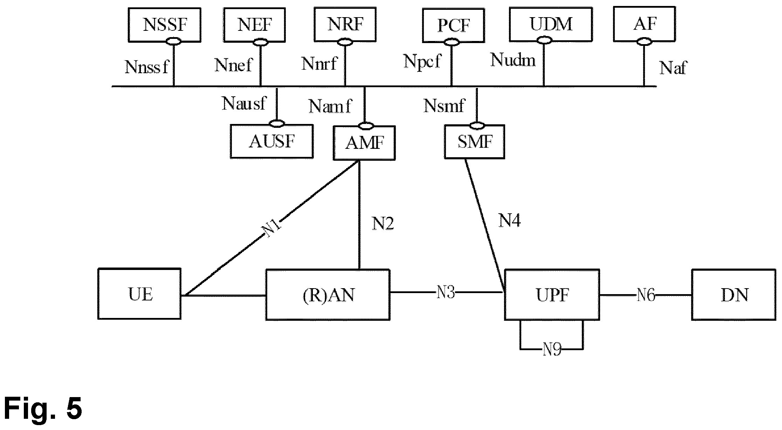

**Fig. 5** illustrates a 5G NR non-roaming reference architecture (see TS 23.501 v16.6.0, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNB and a UE in accordance with the QoS requirement and control circuitry, which, in operation, performs the services using the established PDU session.

### System information transmission

System information is downlink broadcast information transmitted by a base station (gNB in 5G, in general a network node). It includes information for a UE to establish connection with the base station. In 5G, UE reads system information for cell camping when it is powered on, for cell selection and re-selection when it is in RRC_IDLE mode. System information provides all necessary details such as system frame number, system bandwidth, PLMN, cell selection and re-selection thresholds etc. to access the network.

System information is structured in a Master Information Block (MIB) and System Information Blocks (SIBs). SIBs accommodate various information. For the present disclosure of relevance may be information related to NTN transmission as will be described below. The MIB information is transmitted (broadcasted) via BCH and PBCH channels while SIBs are transmitted via DL-SCH and PDSCH channels.

In general, system information may be transmitted periodically (so that the newly connecting terminals may obtain it) or on demand. The periodic schedule of system information transmission is configurable by RRC. In particular, a SIB1 (which is referred to by MIB) carries scheduling information which specifies e.g. the system information window (repetition period of the system information transmission pattern), some transmission parameters (e.g. physical layer parameters) to receive the system information, and the mapping (transmission pattern) of the SIBs within the system information window.

### Non-Terrestrial Networks, NTN

A non-terrestrial network refers to a network, or segment of a network using RF resources on board of an airborne or space-borne entity for transmission. Space-borne vehicles are for instance satellites (including Low Earth Orbiting (LEO) satellites, Medium Earth Orbiting (MEO) satellites, Geostationary Earth Orbiting (GEO) satellites as well as Highly Elliptical Orbiting (HEO) satellites). Airborne vehicles are for instance High Altitude Platforms (HAPs) encompassing Unmanned Aircraft Systems (UAS) including Lighter than Air UAS (LTA), Heavier than Air UAS (HTA), all operating in altitudes typically between 8 and 50 km, quasi-stationary.

In 3GPP, NR-based operation in a non-terrestrial network (NTN) is studied and described (see e.g. 3GPP TR 38.811, "Study on New Radio (NR) to support non-terrestrial networks", version 15.4.0, and 3GPP TR 38.821, "Solutions for NR to support non-terrestrial networks", version 16.1.0).

NTNs typically feature the following system elements: an NTN terminal, which may refer to a 3GPP UE or a terminal specific to the satellite system in case a satellite does not serve directly 3GPP UEs; a service link which refers to the radio link between the user equipment and the space/airborne platform; an airborne platform embarking a payload; gateways that connect the space/airborne platform to the core network; feeder links which refer to the radio links between the gateway and space/airborne platform.

The platform can implement either transparent or regenerative payload transmissions. In the transparent payload, the platform acts as a repeater by filtering, converting, and amplifying the wave signal, while the payload is unchanged. In the regenerative payload, the platform has some or all of the base station functionalities. It may perform demodulation/modulation, switching/routing, coding/decoding in addition to radio frequency filtering, conversion and amplification. The Inter-satellite links (ISL) can optionally be used to form a constellation of satellites. ISL (Inter-Satellite Links) is a transport link between satellites.

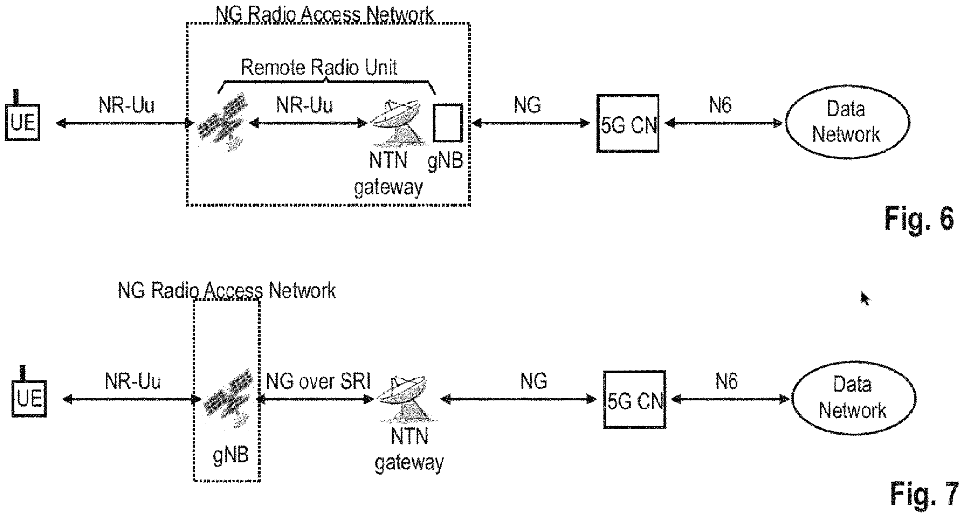

**Fig. 6** illustrates a scenario of a non-terrestrial network, wherein a transmission between a terminal (UE) is performed via a remote radio unit including a satellite and an NTN gateway. A gNB is located at the gateway as a scheduling device. The satellite payload implements frequency conversion and radiofrequency amplifier in both uplink and downlink direction. Hence, the satellite repeats the NR radio interface from the feeder link (between the NTN gateway and the satellite) to the service link (between the satellite and the UE) and vice versa. The Satellite Radio Interface (SRI) on the feeder link is the NR-Uu. In other words, the satellite does not terminate NR-Uu. A satellite in this configuration is referred to as a transparent satellite.

**Fig. 7** illustrates a scenario of a non-terrestrial network, wherein a transmission between a terminal (UE) is performed via a satellite including a gNB as a scheduling device. A satellite in this configuration is referred to as a regenerative satellite. According to one exemplary implementation (see TS 38.321 "NR; Medium Access Control (MAC) protocol specification", version 17.3.0, Section 5.2), the NG-RAN logical architecture as described in TS 38.401, "NG-RAN; Architecture description", version 17.3.0 is used as baseline for NTN scenarios. The satellite payload implements regeneration of the signals received from Earth. The NR-Uu radio interface is on the service link between the UE and the satellite. The Satellite Radio Interface (SRI) is on the feeder link between the NTN gateway and the satellite. SRI (Satellite Radio Interface) is a transport link between the NTN GW and satellite.

For LEO, MEO, and HEO satellites, which do not keep a their position fixed with respect to a given earth point, a satellite beam, which corresponds to a cell or PCI (Physical Cell ID) or to an SSB (Synchronization Signal Block) beam of the NR wireless system may be moving over the earth.

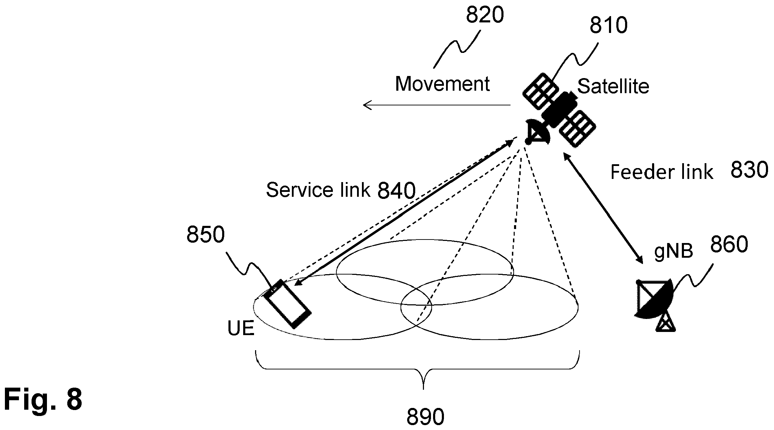

An NTN scenario that provides cells which are continuously moving on the Earth (e.g. a LEO, MEO, or HEO based NTN), is referred to as an earth moving cell scenario. The continuous cell motion on the Earth is due to the operation where the satellite beam is fixed with respect to the NTN platform. Therefore, the footprint of the cell, which may correspond to several satellite beams or one satellite beam, slides on the earth surface with the motion of the NTN platform (e.g. a LEO satellite). This is illustrated in **Fig. 8****.** A satellite 810 moves (illustrated by the movement arrow 820), e.g. with a velocity of 7.6 km/s. It may provide one or more cells (here three cells) 890. There is a service link 840 between a UE 850 and the satellite 810. System information, and, in particular, a system information block (SIB) carries NTN information, sometimes referred to as NTN-SIB. Currently, SIB19 carries NTN-information in 3GPP NTN-NR. The system information is broadcasted by the satellite 810. The present disclosure is not limited to any particular network configuration. In some communication systems that may still profit from the present disclosure, the satellite may be controlled to broadcast the system information by the gNB 860. There is a feeder link 830 delay between the satellite 810 and a gNB 860

### Handover in between cells belonging to a non-terrestrial network (NTN)

Handover in non-terrestrial cells is associated with some additional issues compared to the handover in terrestrial cells. For example, the handover may be necessary not only due to the movement of a UE, but also due to the movement of the cells themselves, caused by the movement of the non-terrestrial base station or the Earth, depending on the type of the cell.

An issue may be a possibly huge amount of UEs that may need to be handed over from one cell (e.g. serving cell) to a neighboring cell (up to almost 20,000 UEs/s), or in general, from one cell to another cell. The huge amount of UEs may be caused by the cells moving, so that any UEs in such cells need to be handed over. Such handovers typically have to be performed within a short time in order to ensure a seamless connection.

Following is a table 7.3.2.1.6-1 taken from 3GPP TR 38.821 V16.1.0 and showing inter alia the average handover (hand-out and/or hand-in) rate in number of UEs per second according to cell diameter/area and exemplary UE density for satellite cells.

**Table 7.3.2.1.6-1: Average HO rate for a given cell diameter, assuming 65519 connected UEs (NOTE 1)**

| **Cell Diameter (km)** | **Approximate Cell Area (km²)** | **Average UE density (UE/km²)** | **Satellite speed (km/s)** | **Time to HO all UEs in cell (s)** | **Average "hand-out" rate (UE/s)** | **Average HO Rate (in+out (UEs/s)** |
|---|---|---|---|---|---|---|
| 50 | 1964 | 33.36 | 7.56 (NORE 2) | 6.61 | 9912 | 19824 |
| 100 | 7854 | 8.34 | | 13.23 | 4952 | 9904 |
| 250 | 49087 | 1.33 | | 3307 | 1981 | 3962 |
| 500 | 196000 | 0.33 | | 6614 | 991 | 1982 |
| 1000 | 785000 | 0.08 | | 132.28 | 495 | 990 |

Due to latency reasons, it may be useful to let connected UEs initialize handovers based on predefined conditions being configured by the network beforehand. Such handovers may be referred to as conditional handover (CHO).

Currently, there are three types of conditional events available for handing over from the serving cell to a neighboring cell: a type of events based on radio frequency (RF) measurements, a type of events based on a time threshold, and a type of events based on a location threshold.

The conditional events based on RF measurements (for serving and/or neighbouring cell) are for instance as follows:
- *CondEvent A3*: A conditional reconfiguration candidate becomes amount of offset better than PCell/PSCell. For example, a UE measures signal strength (received power) of a candidate cell that is higher than a signal strength measured for its current serving cell, wherein it has to be higher by a preconfigured or predefined amount.
- *CondEvent A4*: A conditional reconfiguration candidate becomes better than an absolute threshold. For example, a UE measures a signal strength higher than a preconfigured or a predefined threshold.
- *CondEvent A5*: PCell/PSCell becomes worse than an absolute threshold1 AND a conditional reconfiguration candidate becomes better than another absolute threshold2 (different from threshold1). For example, a UE measures the signal strength in its serving cell and in some further cell(s). In case the serving cell has a signal strength below the first threshold (threshold1) and a candidate cell has a signal strength above the second threshold (threshold2).

A conditional event based on a time threshold is for instance:
- *CondEvent T1*: Time measured at UE becomes more than configured threshold t1-Threshold but is less than t1-Threshold + duration. For example, time instance t1-Threshold marks the start of a time window which has a duration denoted as "duration". Thus, a UE may perform handover within the time window.

A conditional event based on a location threshold may be as follows:
- *CondEvent D1*: Distance between UE and a reference location *referenceLocation1* becomes larger than configured threshold *distanceThreshFromReference1* and distance between UE and a reference location *referenceLocation2* of conditional reconfiguration candidate (e.g. a cell other than a current serving cell) becomes shorter than configured threshold *distance ThreshFromReference2.*

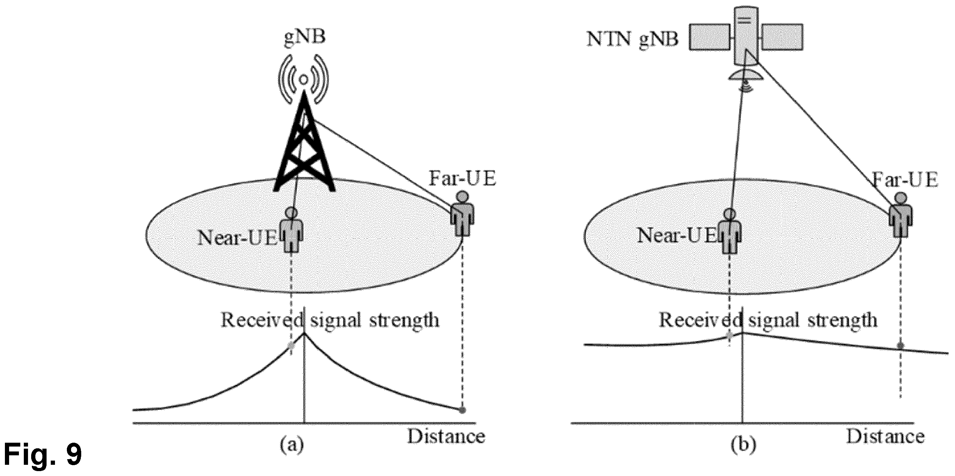

Regarding the above-mentioned RF measurements, in terrestrial systems, a UE can determine that it is near a cell edge due to a clear difference in RSRP as compared to cell center. This is shown in part (a) of Fig. 9. Such an effect may not be as pronounced in non-terrestrial deployments, resulting in a small difference in signal strength between two beams in a region of overlap as shown in part (b) of Fig. 9. As the releasse15 handover mechanism is based on RF measurement events (e.g. A3), the UE may thus have difficulty distinguishing the better cell. Due to this field (signal) strength situation, RF measurements on their own might be insufficient for initializing a conditional handover (see *CondEvents A3* to *A5*).

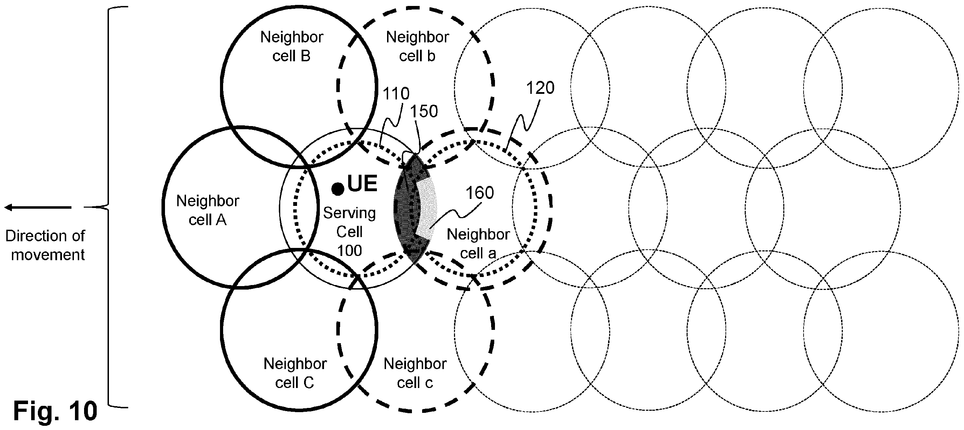

Fig. 10 illustrates coverage of multiple cells which are represented by respective circles. A UE (illustrated as a black dot) is located in a serving cell 100. The serving cell is surrounded by six neighboring cells denoted A, B, C, a, b, and c. There is an overlap 150 between the coverage of the serving cell and the neighboring cell a. A ring 110 within the serving cell 100 denotes area between the serving cell border and a border of the serving cell area portion that is located less than 90% distance from the cell centre, corresponding to using *CondEvent D1.* Here, 90% is merely exemplary. In general, such location threshold may be higher (e.g. 95%) or lower (e.g. 88%).

However, the location threshold, i.e. *CondEvent D1* is currently not well adapted to the geometry of the RF-wise overlap of neighboring cells either. It might enforce handing over a large number of UEs within an unnecessary short time period. Fig. 10 illustrates the issue assuming a *distanceThreshFromReference1* = 0.8 *distance Thresh* (80% of the radius of the serving cell coverage area) and a *distanceTreshFromReference2 =* 0.8 *distanceTresh* (80% of the radius of the neighboring cell coverage area) criterion. There is an obvious mismatch between the outer "donut" segment 160 fulfilling the aforementioned criteria and the real overlapping region 150 where a handover is feasible.

"Donut" here refers to an area between two concentric circles, e.g. the circle defined by the *distance Thresh* (serving cell coverage) and the circle defined by *distanceThreshFromReference1,* which is in this example 0.8 * *distance Thresh* (and in general, a preconfigured value). For the neighboring cell, the donut refers also to an area between two concentric circles, namely the circle defined by the *distance Thresh* (neighboring cell coverage, in this example same as the serving cell coverage) and the circle defined by *distanceThreshFromReference2,* which is in this example again 0.8 * *distance Thresh.* In principle *distanceThreshFromReference2* does not have to correspond to *distanceThreshFromReference1,* they may also differ.

A combination of a *CondEvent A3, A4* or *A5* with the current *CondEvent D1* might be sub-optimal as a sole criterion for handover as well, because the donut-segment-formed area 160 at the outside of the coverage area of the serving cell does not represent the overlapping area 150 of that serving cell and neighboring cells well.

Regarding the time threshold, indicating a time window - as feasible with *CondEvent T1 -* represents a somewhat inefficient approach due to the fact that it can hardly be the same for all UEs in the serving cell, because it may depend on the location of the UE within the serving cell, on the speed the UE moves with, and/or on the direction of the UE movement.

It is recognized in the present disclosure that it may be desirable to prevent or at least to reduce the number of unnecessary handovers and to spread the inevitable handovers over the entire time period the UE is located within the overlapping region between neighboring cells. Moreover, the above mentioned conditions may not be sufficient to increase efficiency of the handovers.

### Signaling coverage area of a neighboring cell

According to an embodiment, in addition to an indication of a coverage area of a serving cell, also coverage area(s) of the respective neighboring cell(s) that may be potential targets cells within a certain time frame are indicated.

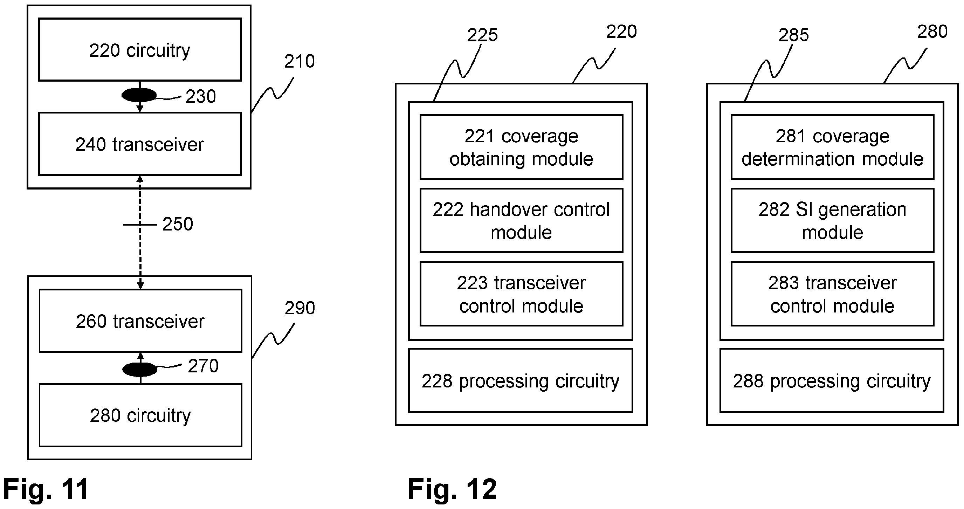

For example, a user equipment, UE, 210 is shown in Fig. 11 that comprises a transceiver 240 and circuitry 220. The transceiver 240 is configured to receive system information for a non-terrestrial network. The circuitry 220 is configured to determine, from the system information, an information element including an indication of coverage of one or more neighboring cells adjacent to a serving cell of said UE. The circuitry 220 is further configured to determine whether to handover according to (depending on) the coverage of at least one neighboring cell out of the one or more neighboring cells and according to a location of the UE.

For example, a base station, BS, 290 is provided for a non-terrestrial network. The base station 290 is also shown in Fig. 11. The basis station may be installed on a non-terrestrial vehicle or that the base station (not itself entirely installed on the non-terrestrial vehicle) may control such non-terrestrial vehicle to provide / illuminate one or more non-terrestrial cells. The base station 290 comprises a transceiver 260 and circuitry 280. The circuitry 280 is configured to determine a coverage of one or more neighboring cells adjacent to an own cell of said BS and to generate system information comprising including into the system information an information element including an indication of the coverage of the one or more neighboring cells. The transceiver 260 is configured to transmit the system information.

In general, the term "information element" refers to an element of a protocol syntax (such as the RRC protocol mentioned above) which may but does not have to encapsulate further information elements. The UE 210 may use the non-terrestrial cells to access a communication network such as 5G NR. The base station 290 may be directly located in the serving non-terrestrial vehicle (e.g. a satellite) or control the serving non-terrestrial vehicle as discussed above with reference to Figs. 6 and 7. In the context of 5G NR, the base station may be the gNB. The present disclosure is readily applicable to the 5G NR system, but not limited thereto. Any current or future communication systems that employ non-terrestrial cells may benefit from the present disclosure.

As shown in Fig. 11, the UE 210 and the BS 290 may communicate via a channel 250. In particular, the BS 290 may transmit the system information to the UE 210 over the channel 250 which may include a wireless channel between a non-terrestrial vehicle and a the UE.

A transceiver (such as the transceiver of the UE 240 and the transceiver 260 of the BS) may be any receiver and/or transmitter including, for example, one or more antennas and the corresponding amplifier(s) and a modulator / demodulator (for up-conversion to / down-conversion form the system carrier). The transceiver may be controlled by a control module to perform transmission and/or reception of particular data with particular timing and in particular resources. Such control module may be part of the circuitry 220, 280.

The circuitry (such as the circuitry of the UE 220 and the circuitry 280 of the BS) may include one or more processors, one or more memory modules, one or more pieces of programmable hardware or application specific hardware, and/or some further electronics elements.

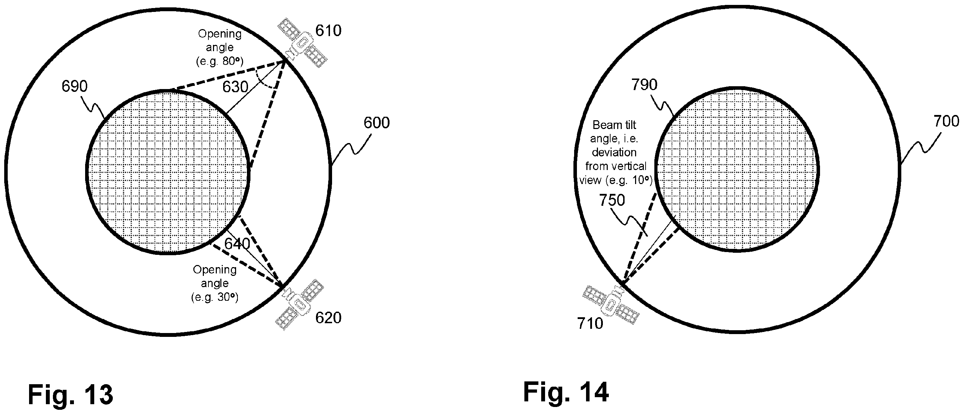

For example, as shown in Fig. 13 for the BS 290, the circuitry 280 may comprise processing circuitry 288 and memory circuitry 285. The processing circuitry 288 may be controlled by a program code stored in the memory circuitry 285. The program code may include functional modules 281, 282, 283 that configure the processing circuitry 288 to perform the above mentioned BS functionality. In particular, coverage determination module 281 configures the processing circuitry to determine a coverage of one or more neighboring cells adjacent to an own cell of said BS whereas the system information (SI) generation module 282 configures the processing circuitry to generate system information with an information element including an indication of the coverage of the one or more neighboring cells. The transceiver control module 283 controls the transceiver 260 over an interface 270 to transmit the system information in the resources scheduled for its transmission; e.g. the transceiver control module 283 outputs to the transceiver 260 the system information to be transmitted. It is noted that the memory circuitry 285 may include further modules that implement further functions of the BS 290.

For example, as shown in Fig. 12 for the UE 210, the circuitry 220 may comprise processing circuitry 228 and memory circuitry 225. The processing circuitry 228 may be controlled by a program code stored in the memory circuitry 225. The program code may include functional modules 221, 222, 223 that configure the processing circuitry 228 to perform the above mentioned UE functionality. In particular, a coverage obtaining module 221 configures the processing circuitry to obtain from the system information an information element including an indication of coverage of one or more neighboring cells adjacent to a serving cell of said UE whereas the handover control module 222 configures the processing circuitry to determine whether or not to handover according to the coverage of at least one neighboring cell out of the one or more neighboring cells (and further according to a location of the UE). The transceiver control module 223 controls the transceiver 240 over an interface 230 to receive the system information in the resources scheduled for its transmission; e.g. the transceiver control module 223 receives from the transceiver 240 the received signal including the system information. It is noted that the memory circuitry 225 may include further modules that implement further functions of the UE 210. The circuitry 220 may be further configured to initiate a handover if it is determined that the UE is to handover.

The memory circuitry may be on chip with the processing circuitry or integrated within one or more chips separate from the processing circuitry integration.

For example, the indication of coverage includes, for a neighboring cell out of the one or more neighboring cells, an indication of a centre of the neighboring cell and a radius of the neighboring cell. Such indication enables to model the coverage as a circular area. It may be desirable to indicate the coverage in the same format (e.g. as centre and radius) for each of the one or more neighboring cells. However, the present disclosure is not limited to such indication and the coverage may be indicated in a different manner for some cells out of the one or more neighboring cells. For example, it is conceivable to indicate, for some cells, a full information and to indicate for the remaining cells only an indication of identity (e.g. indication that the radius is same as for a reference cell for which the radius has already been included into the system information) or a difference (e.g. a difference in location with reference to a reference cell and/or a difference in radius relative to the radius of the reference cell).

In an exemplary implementation, the neighboring coverage information can describe the coverage of a neighboring cell in a manner similar as for the serving cell, i.e. with parameters similar to *referenceLocation-r17* and *distanceThresh-r17.* The *referenceLocation-r17* may carry the location of the center of the cell and *distanceThresh-r17* may carry the radius.

In particular, currently, in NR, the SIB19 carries the following elements:

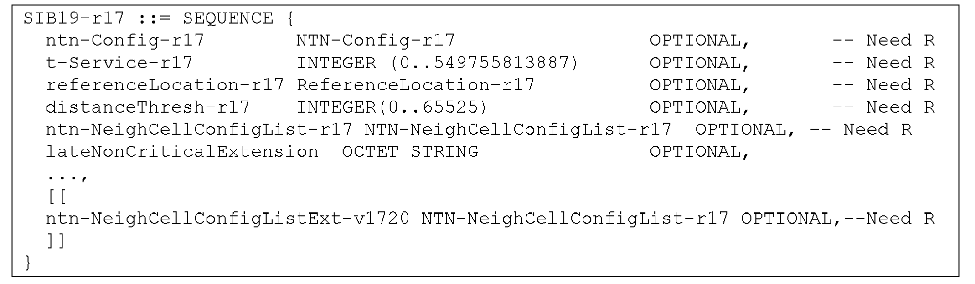

As can be seen, the *referenceLocation* and *distance Thresh* are indicated for the cell providing the system information (e.g. the primary cell PCell or serving cell). According to the above mentioned exemplary implementation, these parameters may be included for one or more (or each of) the neighboring cells listed in the IE container ntn-NeighCellConfigList or ntn-NeighCellConfigListExt. It is noted that suffix "-r17" in the name of lEs merely indicates the release of standard for which the respective IE is available. Thus, herein, the elements are referred to without this suffix, as it is immaterial for the present disclosure in which version of a standard it would be embedded. The *referenceLocation* and *distance Thresh* may be indicated within the existing IE pertaining to a neighboring cell in the list of the neighboring cells. Alternatively, *referenceLocation* and *distance Thresh* may be indicated within a separate IE that may be a separate list signaling the coverage for one or more cells included in the ntn-NeighCellConfigList or ntn-NeighCellConfigListExt list. However, the present disclosure is not limited to providing the coverage indication in the form of reference location and radius.

According to an exemplary implementation, the indication of coverage includes, for a neighboring cell out of the one or more neighboring cells, an indication of an opening angle of a satellite beam forming said neighboring cell and/or a tilt of the satellite beam from a vertical line.

Fig. 13 illustrates a beam opening angle 630 for an exemplary case of a cell provided by a satellite 610 and a beam opening angle 640 for another exemplary case of a cell provided by a satellite 620 that both orbit the Earth 690 on an orbit 600. The two opening angles 630 and 640 differ from each other: the angle 630 in this example has 80 degrees, whereas the angle 640 has 30 degrees. Since both satellites 610 and 620 are on the same orbit 600, the angle opening has a dominant impact on the cell coverage (cell size). In the example if Fig. 13, it is shown that the cell is beamed onto the Earth surface with the shortest path. In other words, the axis of the beam is perpendicular on the Earth surface. In such deployment scenarios, it may be sufficient to indicate the opening angle per cell as an indication of coverage. The UE may then use this indication alongside with the knowledge of the orbit height and possibly the position of the non-terrestrial vehicle (e.g. satellite as in Fig. 13) to determine the location of the cell. The orbit height and/or the position may be known from the system information concerning the neighboring cells.

Fig. 14 shows another exemplary case, in which an opening angle 750 of a cell beam provided by a satellite 710 is tilted relative to the direction of the shortest distance (perpendicular direction). In other words, the beam has an orientation, i.e. a non-zero tilt angle. Fig. 14 illustrates a tilt of 10 degrees relative to the vertical view (from the satellite 710 on orbit 700 onto the Earth 790). For such cases, it may be advantageous to indicate the coverage not only by way of opening angle 750, but also by way of angle tilt. Thus, in this exemplary case, the IE carrying the coverage indication may indicate (e.g. as two separate lEs) an indication of the satellite beam's orientation (tilt angle) and its opening angle. As noted previously, the altitude of the orbit is known with the position indication of the reference satellite (which might be the serving satellite). One or the advantages of signalling the coverage area by way of opening angle and tilt is that it may indicate a non-circular coverage unlike to the signalling of radius and reference point discussed above.

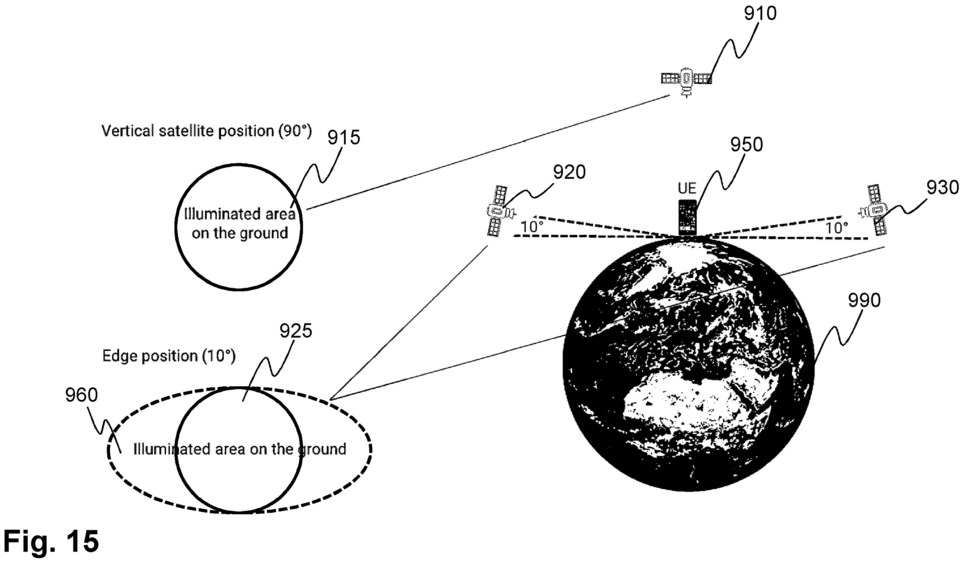

However, the signalling of a reference point (centre) and radius may be also adapted to allow for an indication of an elliptical form of the cell coverage area. In particular said information element including an indication of coverage may allow for specifying the coverage as an ellipse. Such information element may include, instead of a sole radius, two parameters - a long radius and a short radius (or a long diameter and a short diameter). Such signalling may facilitate a more precise information of the cell coverage especially in cases in which the non-terrestrial vehicle produces a beam which is not vertical. This is illustrated in Fig. 15. In particular, a UE 950 is located on an area on the Earth 990. Satellite 910 is located directly above (vertically) the UE 950 and thus forms a cell 915 which has a substantially (not counting impact of terrain) circular shape. On the other hand, a satellite 920 (as well as satellite 930) are located just 10 degrees above the ground. This results in the illuminated area 960 in form of an ellipse. As can be seen, the coverage of the area 960 differs substantially from the coverage or an area 925 which would result from signalling of only one radius. Especially in the case of quasi-earth-fixed cells there might be - in particular when getting closer to the minimum elevation - coverage situations deviating from the circular form (see image below).

As was shown above, the center (or in general a reference location) of a cell and its radius may be signaled with *referenceLocation-r17* and *distanceThresh-r17.* In order to provide for signaling suitable for an elliptically formed cell, in addition to the *referenceLocation-r17,* further two parameters may be introduced, namely *shortDistanceTresh-r18* and *longDistanceTresh-r18.* They may have the same value range as the *distanceThresh-r17.*

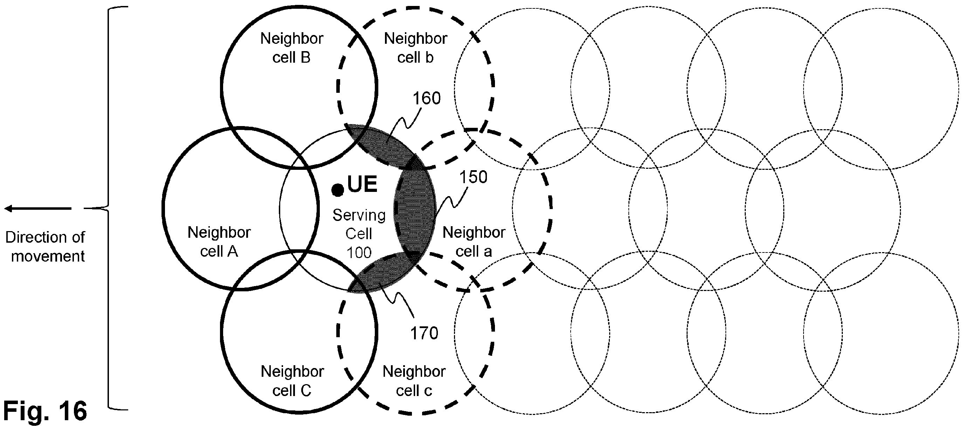

The neighboring cells are listed in a system information transmitted by a primary cell (PCell) which may be the serving cell. In general, there is no limitation on the number of cells that must be included into the list. Fig. 16 illustrates a serving cell 100 in which a UE is located. The serving cell is surrounded by neighboring cells A, B, C and a, b, c. Out of these neighboring cells, cells a, b, c are the cells which may become candidates to handover for the UE. This is because the cells are moving to the left as indicated by a left arrow in Fig. 16. As soon as the cells move so far that the UE becomes located in the overlapping regions 150 (with neighboring cell a), 160 (with neighboring cell b), and 170 (with neighboring cell c), it may be advantageous to perform handover. It is noted that in case the cells would move in the opposite direction (to the right in Fig. 16), neighbor cells A, B, and C would be more suitable candidates for a handover.

Correspondingly, the one or more neighboring cells for which the coverage is indicated include at least one of:
- a neighboring cell in the same orbit as the orbit of the serving cell. In Fig. 16, this is exemplified by cell a.
- a neighboring cell in an orbit adjacent to the orbit of the serving cell on a first side of the orbit of the serving cell. In Fig. 16, this is exemplified by cell b located on the top side of the serving cell orbit.
- a neighboring cell in an orbit adjacent to the orbit of the serving cell on a second side of the orbit of the serving cell opposite to the first side. In Fig. 16, this is exemplified by cell c located on the bottom side of the serving cell orbit.

If all three cells a, b, c are available, it would be desirable to actually include into the one or more neighboring cells all three above mentioned cells and to signal their coverage. These three cells a, b, c located to the right hand side of the serving cell 100 in Fig. 16 follow the serving cell 100 in the motion direction of the serving cell. Further cells to the right (following the cells a, b, c in the motion direction of the serving cell) might be indicated in the system information. This may be beneficial for example in a case that the coverage areas of the cells are small (e.g. about 50 km diameter).

### Performing handover decision

Signaling of the coverage provided by the neighboring cell may be used by the UE to determine whether or not to perform handover to a neighboring cell (and to which one). In particular, a UE can detect whether it is located within the overlapping region of neighboring cells such as the region 150, 160 or 170. When it is located in one of the overlapping regions, the UE may decide to handover to the neighboring cell.

In particular, the determining whether or not to handover at a UE includes:
- estimating whether or not the UE is located within a coverage of a neighboring cell of the one or more neighboring cells as well as within a coverage of the serving cell based on said indication of coverage, and
- deciding whether or not to handover to the neighboring cell based on a first condition that requires for a UE to handover that the UE be located within said overlapping coverage region.

It is noted that the estimation may be performed based on the coverage of the neighboring cell and based on the coverage of the serving cell, both determined based on system information. Moreover, a UE is aware of its own location. For instance, the UE may determine its own position based on GNSS (Global Navigation Satellite Systems) or in any other way known in the art.

The first condition may be the only condition to decide that a handover is to be performed. However, the present disclosure is not limited thereto and the condition may include further requirements. Moreover, the decision on whether to perform handover may be separate from the decision when to perform a handover. For example, once the first condition is satisfied, the UE may determine when to perform handover and perform the handover at the determined time instant.

In an exemplary implementation of signaling, the system information includes an information element specifying a handover condition for UE to decide whether or not to handover out of a set of predefined handover conditions including said first condition. In other words, a UE may be configured by the network to determine whether or not to handover based on specific condition. The set of predefined conditions may correspond to the above mentioned set currently available, i.e. include in addition to the first condition a further one or more conditions mentioned above (Conditions A to A5, T1, and D1).

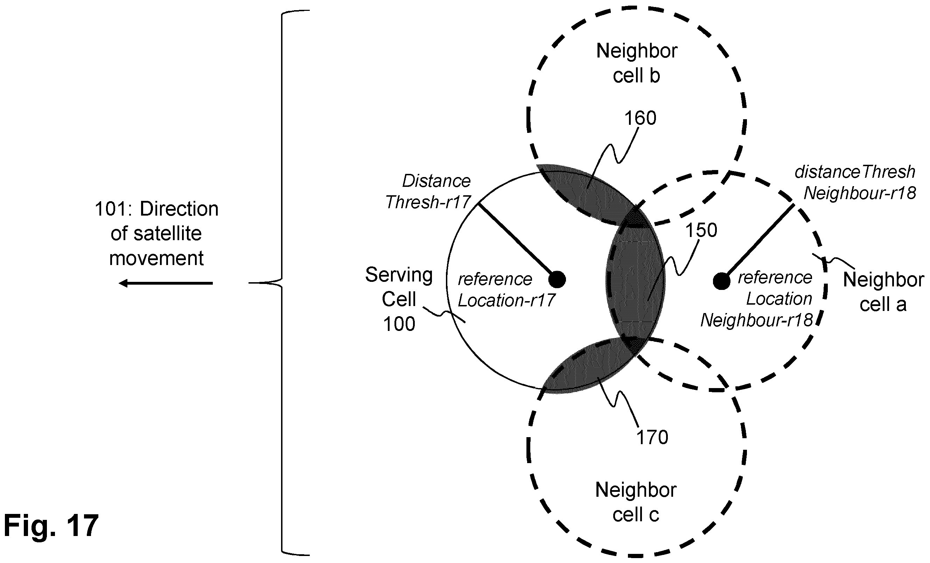

Fig. 17 illustrates a part of Fig. 16, namely the serving cell 100 and its neighboring cells a, b, and c that follow the serving cell in the direction 101 of its movement (here considered to be equal to the direction of a satellite that generates the cell). The serving cell in this example has a coverage given by an indication comprising the reference location *referenceLocation-r17* (e.g. in the centre point of the serving cell) and the radius *distanceTresh-r17.* The neighboring cell a has a coverage given by the corresponding parameters indicating the reference location *referenceLocationNeighbour-r18* (e.g. in the centre point of the neighboring cell a) and the radius *distanceTreshNeighbour-r18.* The overlapping region between the serving cell 100 and the neighboring cell a is denoted as 150.

A new location-based *CondEvent D2* may be an example of the above-mentioned condition and it may require that a
distance between the UE and a reference location referenceLocation1 is smaller than configured threshold distanceThreshFromReference1 and distance between UE and a reference location referenceLocation2 of conditional reconfiguration candidate becomes shorter than configured threshold distanceThreshFromReference2, i.e. the UE reaches the overlapping area between coverage area 1 and coverage area 2.

Herein, in order to describe the overlapping area (150, 160, or 170) of the serving cell with a respective neighboring cell (a, b, c), the referenceLocation1 and the distanceThreshFromReference1 represent the reference location (e.g. the centre) and the radius of the serving cell. Parameters referenceLocation2 and distanceTreshFromReference2 represent the reference location (e.g. centre) and the radius of a neighboring cell (e.g. a or b or c).

The new *CondEvent D2* might be extended towards elliptical cell coverage areas already mentioned above with reference to Fig. 15. The logic of the new *CondEvent D2* remains the same in that case. The only difference to the preceding example is that instead of one radius *distanceTreshNeighbour-r18,* two radius parameters *shortDistanceTreshNeighbor-r18* and *longDistanceTreshNeighbor-r18* are indicated within the system information for the neighboring cell and used in testing whether the UE is in the overlapping region. In addition or alternatively, the coverage of the serving cell may also be indicated as having an elliptical shape, e.g. by providing two radius parameters *shortDistanceTresh-r18* and *longDistanceTresh-r18* in the system information. And used in testing whether the UE is in the overlapping region.

Based on the knowledge regarding the coverage of neighbouring cells, amount of superfluous handovers may be reduced. For example, a quick succession of handing over from the serving cell to neighbour cell b and shortly afterwards to neighbour cell a could be prevented in the presence of the cell coverage area information for both neighbouring cells. This is because a UE would be in a position to more accurately estimate the time during which it will be present in the overlapping regions 150 and 160.

In order to reduce the huge number or handovers to be performed at the same time by all UEs in the cells, in an exemplary implementation that is applicable to any of the preceding embodiments and examples, the UE randomly decides where or when within the overlapping region it switches to the neighboring cell. The randomization may be performed according to any one of the well-known mechanisms for generating a random number. In particular, the deciding whether or not to handover includes deciding when to handover that is further based on a randomly generated number.

Here, the randomization is not (necessarily) a part of the configurable first condition. The UE may at first decide that a handover will be performed when it is detected to be located in the overlapping region (such as 150). Then, the UE may decide when to handover (which may be seen as deciding for different time instances during UE's presence in the overlapping region whether or not to handover). However, the present disclosure is not limited to such two-step approach. In general, the first condition may include an additional requirement of an instantly generated random number to be larger than a predefined threshold.

The randomization may be configurable by the base station. In particular, the base station may configure the probability distribution of the random generator or the predefined threshold or it may even provide individual UEs or group or UEs with a ransom value for performing the decision.

For example, said deciding whether or not to handover to the neighboring cell includes at the UE side:
- determining an own location of the UE;
- estimating a time interval during which the UE is located within the coverage of the neighboring cell as well as within the coverage of the serving cell; and
- deciding randomly at which time point within the time interval the UE is to handover.

It is noted that the estimating of the time interval may be further based on an own velocity and/or direction of movement of the UE. The estimating of the time interval may be further based on a velocity and/or direction of movement of the cell (vehicle carrying the cell such as a satellite). These may be obtained in any of the known ways.

The use of the information on velocity may be particularly suitable for cases in which the satellite opening angle and tilt angle are given for the neighboring cells or for the cases in which the coverage area indication with centre point and radius is updated infrequently.

In general, for the estimation of the time period available for handing over from the serving cell 100 to a neighboring cell a, the UE may be aware of the geographical extent of the overlapping region at the current position of the UE. This is provided as discussed above based on the system information which indicates coverage for the serving cell and/or the neighboring cell. The UE is also aware of its own position base on for instance GNSS (GPS, GALILEO, or other navigation systems). The speed of the satellites is given by the speed indication of the serving cell and/or the indication of the orbit of the neighboring cell (or the serving cell, if the neighbor sits in the same orbit) within the system information. Generally, an altitude indication may be sufficient to determine the velocity for some satellites, because the satellite speed depends on the A) radius of the orbit with reference to geocentre, B) mass of the earth and C) the gravitation constant. The speed of the UE and its direction of movement can be taken into account as well. Those parameters can be available at the UE based on its GNSS abilities. However, since the speed of the UE is really low compared to the speed of the satellite, the UE speed and direction would typically not be required.

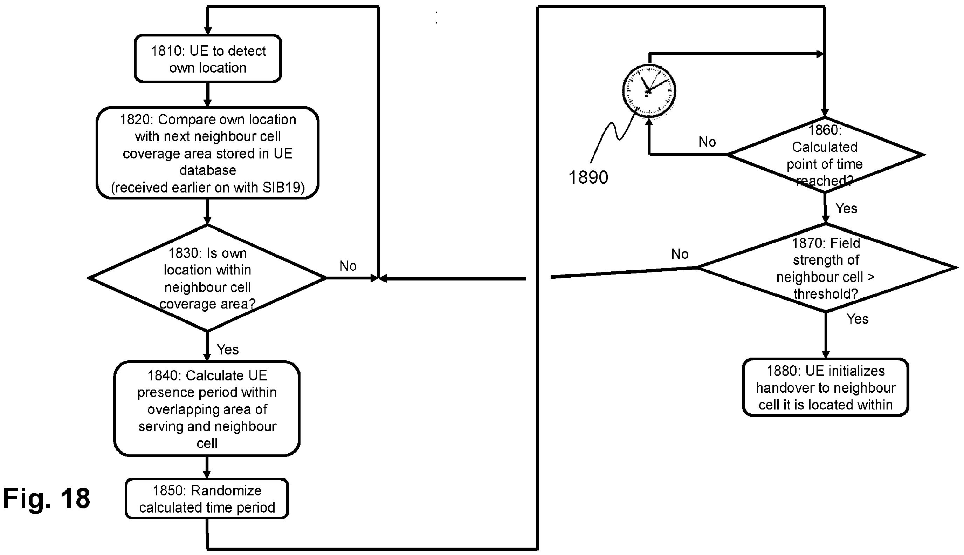

Fig. 18 shows an exemplary flow chart of a method that may be performed at the UE and that combines some of the above mentioned approaches. In step 1810, the UE (the circuitry mentioned above) detects its own location. In step 1820, the UE compares the own location with a next neighbor cell coverage area stored in UE database (received beforehand within system information, e.g. SIB19 in NR). In step 1830, the UE determines whether or not the own location is within the location of the neighbor cell. If affirmative ("yes" in step 1830), the UE calculates in step 1840 its (of the UE) presence period within the overlapping area of the serving cell and the neighbor cell. In step 1850, the UE randomizes the calculated period, i.e. randomly determines in which time point (handover time point) within the calculated period the handover is to be performed.

The UE then regularly checks whether the time point has been reached in a loop including a step 1860 in which it is tested whether the time point has been reached and a step 1890 of increasing the clock. Step 1890 is a delay between the checks.

In this exemplary flow chart, in addition to the above mentioned first condition (tested in step 1830) and the randomization (step 1850), additional condition is tested in step 1870 that regards the radio frequency (RF) parameters of the neighboring cell. In particular, in step 1870, it is tested whether or not a field strength of the neighbor cell exceeds an RF-strength threshold. If affirmative ("yes" in step 1870), in step 1880, the UE initializes a handover to the neighbor cell within which it is located. Otherwise ("no" in step 1870), the method returns to step 1810. If the own location is not within the location of the neighbor cell ("no" in step 1830), the method also returns to step 1810.

The field strength is one of possible conditions. In general, any radio frequency measurement may be used to determine whether the UE has or would have, in the neighboring cell, a sufficient reception quality. Fig. 18 shows the method performed for one cell. However, the method may be performed for a plurality of neighboring cells such as cells a, b, c mentioned above. For instance, if there are further neighboring cells to be tested after "no" in step 1870, the method may continue for the same UE location in step 1820 and the next cell in the list of neighboring cells.

In this way a reliable handover approach with limited gNB/network load may be facilitated. In summary, such approach combines cell coverage information for the neighboring (and herewith identifying the overlapping area of serving cell and neighboring cell) with results of RF measurements that are a suitable combination for proper, ideally seamless, conditional handovers. As the UE is aware of the area and herewith the distance that is available for performing the handover as well as of the velocity of the satellites, it is able to determine a point of time for performing the handover based on a randomization approach. For example: A time instance for handover location = Current point of time + (Random (0, 1) x time the overlapping area needs for passing by at UEs location). Random (0, 1) means that the random generator is configured to output randomly (pseudo randomly) value 0 or value 1. For higher precision, speed of UE and direction of its movement need to be considered, as well.

### Estimation of coverage without explicit signaling

In the preceding embodiments, the coverage of a neighboring cell was signaled. However, there are also possibilities to improve handover decision for non-terrestrial cells which do not require signaling of the coverage of the neighboring cells.

For example, a user equipment, UE, is provided. The UE comprises a transceiver and a circuitry as described above with reference to Fig. 11. The transceiver is configured to receive radio frequency signal of a non-terrestrial cell other than a serving cell. The circuitry is configured to
- determine, whether the received radio frequency signal satisfies a preconfigured condition;
- estimate a remaining serving cell coverage time period during which the serving cell is capable of covering the UE, and
- determine whether and/or when to handover according to whether or not the preconfigured condition is satisfied and based on the estimated serving cell coverage time.

The preconfigured condition may be configured, for example, by system information or RRC signaling from the base station to the UE. However, it may be also prescribed by a standard or the like. As also described for some embodiments above, the determining when to handover may be randomized.

The determining whether and/or when to handover includes, in an exemplary implementation, determining not to handover in case the preconfigured condition is not satisfied, wherein the preconfigured condition requires that the radio signal of the other cell is stronger than a threshold.

In particular, after the UE detects a neighboring cell based on RF the UE can initialize the handover according to its knowledge of how long it takes until the still serving cell disappears. Here, based on RF means for instance, based on a filed strength. If a measured field strength exceeds a threshold, then the neighbor cell is suitable for handover. If the measured field strength does not exceed a threshold, the neighbor cell is not suitable for handover and handover will not be performed.

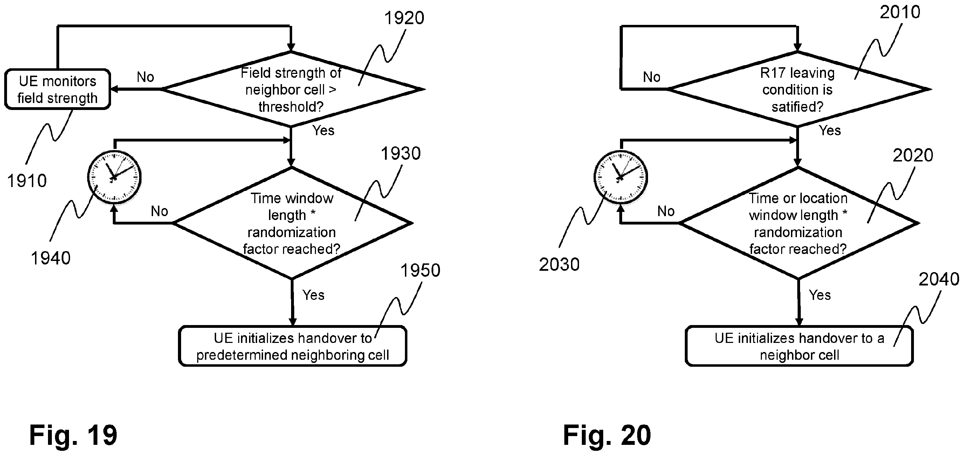

Fig. 19 illustrates an exemplary method by way of a flow chart. In particular, in step 1910 the UE monitors the received field strength (signal strength) of a neighbor cell. In step 1920 it is checked whether the monitored (measured) field strength of the neighbor cell exceeds a threshold. If affirmative ("yes" in step 1920), the UE further determines when to perform the handover. In particular, it determines the serving cell coverage time (referred to as time window or, more descriptively, as the remaining serving cell coverage time period) and a randomization factor. Then the UE decides based on the serving cell coverage time (referred to as time window) and a randomization factor whether to handover. In particular, it is tested whether the time window length * randomization factor has reached a predefined value. If affirmative ("yes" in step 1930), the UE initializes handover to the neighbor cell in step 1950. If the field strength of the neighbor cell does not exceed the threshold ("no" in step 1950), the UE waits in step 1940 (step featuring a delay and possibly a timer increase) and returns back to step 1930 to check again whether to handover.

It is noted that the randomization herein performed by multiplying a random number with the time window is not to limit the present disclosure, which may work with any kind of randomization of the handover time, wherein the handover time is within the time window.

The time window until the serving cell disappears can be determined based on information already available to the UE: For example, based on primary cell (serving cell) system information such as SIB19, the velocity of the cell may be determined. Moreover, the coverage of the serving cell is signaled by way of reference location (e.g. centre) and radius. In this case, the coverage information of the target cell is not given explicitly but implied by the timing information (how long the coverage of the serving cell will last). However, the remaining features of the above described embodiments and examples may be applied in a similar manner. For example, the serving cell coverage may be indicated by way of two radius parameters enabling ellipsoid cell shape and/or the above described events A1-A5, T1, D1 may be applied within the above mentioned preconfigured condition and/or randomization may be applied, etc..

Within the serving cell coverage time period, the handover can take place at random timing. Different UEs can be handed over at different points of time within the aforementioned time period.

Another exemplary implementation of a reliable handover approach with limited gNB/network load and without explicit signaling of the coverage of neighboring cells is provided below. Fig. 20 illustrates the corresponding method for being performed by a UE. In step 2010, a condition for leaving the serving cell is satisfied. The condition may be, for instance, one of the above-mentioned conditions A1-A5, D1, or T1 (referred to as release 17, r17, conditions) for a neighbor cell. If the condition is not satisfied ("no" in step 2010, the testing of the condition is repeated. It the condition is satisfied ("yes" in step 2010), in step 2020, it is tested whether time or location window length * randomization factor has been reached. In general, it is tested whether the randomly selected time point (within the above-mentioned time window) for handover has come. If not ("no" in step 2020), step 2020 is repeated after a delay given by a timer in step 2030. Otherwise ("yes" in step 2020), in step 2040, the UE initializes handover to the neighbor cell.

Also in this example, the condition to leave the serving cell before expiry of the time window and the random determination of the time point for handover within the window is applied. In other words, the handover is randomized by the timer. The randomization of leaving the serving cell can be realized as follows:
- The location within the serving cell is randomized; and/or
- The time after the location based leaving condition is randomized.

By setting the leaving condition randomized before handover, different UEs can be handed over at different points of time. When referring to randomizing the location within the serving cell, what is meant is a random selection of the location within the serving cell at which the UE performed the handover.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Summary of embodiments

According to a first aspect, a user equipment, UE, is provided, comprising: a transceiver that, in operation, receives system information for a non-terrestrial network; and circuitry that, in operation: determines, from the system information, an information element including an indication of coverage of one or more neighboring cells adjacent to a serving cell of said UE; and determines whether or not to handover according to the coverage of at least one neighboring cell out of the one or more neighboring cells and according to a location of the UE.

According to a second aspect, further to the first aspect, the indication of coverage includes, for a neighboring cell out of the one or more neighboring cells, an indication of a centre of the neighboring cell and a radius of the neighboring cell.

According to a third aspect, further to the first aspect, the indication of coverage includes, for a neighboring cell out of the one or more neighboring cells, an indication of an opening angle of a satellite beam forming said neighboring cell and a tilt of the satellite beam from a vertical line.

According to a forth aspect, further to an of the first to third aspect, the one or more neighboring cells includes at least one of: a neighboring cell in the same orbit as the orbit of the serving cell; a neighboring cell in an orbit adjacent to the orbit of the serving cell on a first side of the orbit of the serving cell; and a neighboring cell in an orbit adjacent to the orbit of the serving cell on a second side of the orbit of the serving cell opposite to the first side.

According to a fifth aspect, further to any of the first to fourth aspect, the determining whether or not to handover includes: estimating whether or not the UE is located within a coverage of a neighboring cell of the one or more neighboring cells as well as within a coverage of the serving cell based on said indication of coverage, and deciding whether or not to handover to the neighboring cell based on a first condition that requires for a UE to handover that the UE be located within said overlapping coverage region.

According to a sixth aspect, further to the fifth aspect, the system information includes an information element specifying a handover condition for UE to decide whether or not to handover out of a set of predefined handover conditions including said first condition.

According to a seventh aspect, further to the fifth or sixth aspect, the deciding whether or not to handover includes deciding when to handover that is further based on a randomly generated number.

According to a eighth aspect, further to the seventh aspect, said deciding whether or not to handover to the neighboring cell includes: determining an own location of the UE; estimating a time interval during which the UE is located within the coverage of the neighboring cell as well as within the coverage of the serving cell; and deciding randomly at which time point within the time interval the UE is to handover.

According to a ninth aspect, further to any of the first to eighth aspect, said information element including an indication of coverage allows for specifying the coverage as an ellipse.

According to a tenth aspect, a user equipment, UE, is provided comprising: a transceiver that, in operation, receives radio frequency signal of a non-terrestrial cell other than a serving cell; and circuitry that, in operation: determines, whether the received radio frequency signal satisfies a preconfigured condition; estimates a remaining serving cell coverage time period during which the serving cell is capable of covering the UE, and determines whether and/or when to handover according to whether or not the preconfigured condition is satisfied and based on the estimated serving cell coverage time.

According to a eleventh aspect, further to the tenth aspect, the determining when to handover is randomized.

According to a twelfth aspect, further to the tenth or eleventh aspect, the determining whether and/or when to handover includes determining not to handover in case the preconfigured condition is not satisfied, wherein the preconfigured condition requires that the radio signal of the other cell is stronger than a threshold.

According to a thirteenth aspect, a base station, BS, is provided for a non-terrestrial network comprising: circuitry that, in operation: determines a coverage of one or more neighboring cells adjacent to an own cell of said BS; and generates system information comprising including into the system information an information element including an indication of the coverage of the one or more neighboring cells, and a transceiver that, in operation, transmits the system information.

It is noted that the above mentioned aspects defining the format and content of the signaling (e.g. of the coverage) are equally applicable to the base station, as the base station may generate and transmit the signaling.

According to a fourteenth aspect, a method for handover is provided, comprising: receiving system information for a non-terrestrial network; and determining, from the system information, an information element including an indication of coverage of one or more neighboring cells adjacent to a serving cell of said UE; and determining whether or not to handover according to the coverage of at least one neighboring cell out of the one or more neighboring cells and according to a location of the UE.

According to a fifteenth aspect, a method for transmitting a system information for a non-terrestrial network comprising: determining a coverage of one or more neighboring cells adjacent to an own cell of said BS; and generating system information comprising including into the system information an information element including an indication of the coverage of the one or more neighboring cells, and transmitting the system information.

According to a sixteenth aspect, a method is provided for a UE, the method comprising receiving radio frequency signal of a non-terrestrial cell other than a serving cell; determining, whether the received radio frequency signal satisfies a preconfigured condition; estimating a remaining serving cell coverage time period during which the serving cell is capable of covering the UE, and determining whether and/or when to handover according to whether or not the preconfigured condition is satisfied and based on the estimated serving cell coverage time.

It is noted that these methods may comprise further limitations corresponding to the exemplary implementations and in particular to steps performed by the circuitry mentioned above.

According to a seventeenth aspect a program code is provided, stored on a computer readable and non-transitory medium, including program code instructions which, when executed on one or more processors, cause the one or more processors to execute any of the above mentioned methods.

## Claims

1. A user equipment, UE, comprising:
a transceiver that, in operation, receives system information for a non-terrestrial network; and
circuitry that, in operation:
- determines, from the system information, an information element including an indication of coverage of one or more neighboring cells adjacent to a serving cell of said UE; and
- determines whether or not to handover according to the coverage of at least one neighboring cell out of the one or more neighboring cells and according to a location of the UE.

2. The UE according to claim 1, wherein
the indication of coverage includes, for a neighboring cell out of the one or more neighboring cells, an indication of a centre of the neighboring cell and a radius of the neighboring cell.

3. The UE according to claim 1, wherein
the indication of coverage includes, for a neighboring cell out of the one or more neighboring cells, an indication of an opening angle of a satellite beam forming said neighboring cell and a tilt of the satellite beam from a vertical line.

4. The UE according to any of claims 1 to 3, the one or more neighboring cells includes at least one of:
- a neighboring cell in the same orbit as the orbit of the serving cell;
- a neighboring cell in an orbit adjacent to the orbit of the serving cell on a first side of the orbit of the serving cell; and
- a neighboring cell in an orbit adjacent to the orbit of the serving cell on a second side of the orbit of the serving cell opposite to the first side.

5. The UE according to any of claims 1 to 4, wherein the determining whether or not to handover includes:
- estimating whether or not the UE is located within a coverage of a neighboring cell of the one or more neighboring cells as well as within a coverage of the serving cell based on said indication of coverage, and
- deciding whether or not to handover to the neighboring cell based on a first condition that requires for a UE to handover that the UE be located within said overlapping coverage region.

6. The UE according to claim 5, wherein
the system information includes an information element specifying a handover condition for UE to decide whether or not to handover out of a set of predefined handover conditions including said first condition.

7. The UE according to claim 5 or 6, wherein the deciding whether or not to handover includes deciding when to handover that is further based on a randomly generated number.

8. The UE according to claim 7, wherein said deciding whether or not to handover to the neighboring cell includes:
- determining an own location of the UE;
- estimating a time interval during which the UE is located within the coverage of the neighboring cell as well as within the coverage of the serving cell; and
- deciding randomly at which time point within the time interval the UE is to handover.

9. The UE according to any of claims 1 to 8, wherein said information element including an indication of coverage allows for specifying the coverage as an ellipse.

10. A user equipment, UE, comprising:
a transceiver that, in operation, receives radio frequency signal of a non-terrestrial cell other than a serving cell; and
circuitry that, in operation:
- determines, whether the received radio frequency signal satisfies a preconfigured condition;
- estimates a remaining serving cell coverage time period during which the serving cell is capable of covering the UE,
- determines whether and/or when to handover according to whether or not the preconfigured condition is satisfied and based on the estimated serving cell coverage time.

11. The UE according to claim 10, wherein the determining when to handover is randomized.

12. The UE according to claim 10 or 11, wherein the determining whether and/or when to handover includes determining not to handover in case the preconfigured condition is not satisfied, wherein the preconfigured condition requires that the radio signal of the other cell is stronger than a threshold.

13. A base station, BS, for a non-terrestrial network comprising:
circuitry that, in operation:
- determines a coverage of one or more neighboring cells adjacent to an own cell of said BS; and
- generates system information comprising including into the system information an information element including an indication of the coverage of the one or more neighboring cells, and
a transceiver that, in operation, transmits the system information.

14. A method for handover, comprising:
receiving system information for a non-terrestrial network; and
determining, from the system information, an information element including an indication of coverage of one or more neighboring cells adjacent to a serving cell of said UE; and
determining whether or not to handover according to the coverage of at least one neighboring cell out of the one or more neighboring cells and according to a location of the UE.

15. A method for transmitting a system information for a non-terrestrial network comprising:
determining a coverage of one or more neighboring cells adjacent to an own cell of said BS; and
generating system information comprising including into the system information an information element including an indication of the coverage of the one or more neighboring cells, and
transmitting the system information.
